# EUROPÄISCHE PATENTANMELDUNG

(11) **EP 4 671 577 A2**
(43) Veröffentlichungstag der Anmeldung: **31.12.2025**
(21) Anmeldenummer: 25184817.2
(22) Anmeldetag: 24.06.2025
(51) Int. Cl.: F16K 7/12, F16K 25/00

(54) **VENTILMEMBRAN MIT FUNKTIONALEN BEREICHEN, MEMBRANVENTIL**

(30) Priorität: 26.06.2024 DE 102024118041
(71) Anmelder: GEMÜ Gebr. Müller Apparatebau GmbH & Co. Kommanditgesellschaft, 74653 Ingelfingen (DE)
(72) Erfinder: Klemt, Michael, 74629 Pfedelbach (DE); Meinikheim, Steffen, 74653 Ingelfingen (DE); Rüeck, Thomas, 73494 Rosenberg (DE)
(74) Vertreter: DREISS Patentanwälte PartG mbB

(57) **Zusammenfassung**

Die Erfindung betrifft ein Ventilmembran (10) für ein Membranventil, das Ventilmembran (10) umfassend: einen einer gedachten Lotebene einer Stellachse folgenden Verspannabschnitt (12), und einen vom Verspannabschnitt (12) umgebenen Funktionsabschnitt (16); wobei der Funktionsabschnitt (16) umfasst: wenigstens zwei Walkabschnitte (18); und wenigstens einen stegförmigen, die wenigstens zwei Walkabschnitte (18) voneinander trennenden Dichtabschnitt (20), wobei der Dichtabschnitt (20) lotrecht zu seiner Längserstreckung (22) eine größere Stauchgrenze und/oder einen kleineren Druckverformungsrest als entlang seiner Längserstreckung (22) aufweist.

## Beschreibung

Die Erfindung betrifft eine Ventilmembran für ein Membranventil und ein Membranventil.

Eine Ventilmembran setzt sich aus unterschiedlichen Bereichen zusammen, welche im Betrieb jeweils unterschiedliche Funktionen erfüllen. Ein Dichtabschnitt kommt zur Anlage an einen Ventilsitz des Membranventils zum Abdichten einer Durchgangsleitung eines Membranventils. Zwei Walkabschnitte vollziehen eine Walkbewegung zwischen einer Öffnungs- und einer Schließstellung der Ventilmembran. Ein Verspannabschnitt wird zwischen einem Gehäuseteil des Membranventils und des Antriebssystems verspannt.

Der Erfindung liegt die Aufgabe zugrunde, eine Ventilmembran bereitzustellen, welche optimal für die einzelnen Funktionen ausgebildet ist.

Die der Erfindung zugrundeliegende Aufgabe wird gelöst durch eine Ventilmembran mit den Merkmalen des Anspruchs 1. Die Erfindung ist gerichtet auf eine Ventilmembran für ein Membranventil, die Ventilmembran umfassend: einen einer gedachten Lotebene einer Stellachse folgenden Verspannabschnitt, und einen vom Verspannabschnitt umgebenen Funktionsabschnitt. Der Funktionsabschnitt umfasst wenigstens zwei Walkabschnitte; und wenigstens einen stegförmigen, die wenigstens zwei Walkabschnitte voneinander trennenden Dichtabschnitt, wobei der Dichtabschnitt lotrecht zu seiner Längserstreckung eine größere Stauchgrenze und/oder einen kleineren Druckverformungsrest als entlang seiner Längserstreckung aufweist.

Im Sinne der Erfindung ist unter der "Stauchgrenze" ein Maß für die maximale Spannung, die ein Material oder ein Bauteil aushalten kann, bevor es eine plastische Verformung erfährt, zu verstehen. In einem Spannungs-Dehnungs-Diagramm entspricht die Stauchgrenze vorzugsweise dem Punkt, an dem die Kurve von einem linearen (elastischen) Verlauf in einen nicht-linearen (plastischen) Verlauf übergeht. Die Stauchgrenze wird in N/mm² angegeben.

Im Sinne der Erfindung ist unter dem "Druckverformungsrest" ein Maß zu verstehen, wie viel ein Material oder ein Bauteil sich plastisch verformt, nachdem es einer bestimmten Belastung ausgesetzt und dann entlastet wurde. Der Druckverformungsrest wird in % angegeben.

Zur Ausbildung einer unterschiedlichen Stauchgrenze und/oder eines unterschiedlichen Druckverformungsrest lotrecht und entlang der Längserstreckung des Dichtabschnitts können eine, mehrere oder alle der folgenden Merkmale vorgesehen sein: unterschiedliche Dicke entlang oder lotrecht zur Längserstreckung des Dichtabschnitts; Einlage eines sich lotrecht zur Längserstreckung verjüngenden Versteifungselements im oder am Dichtabschnitt; graduelle Zugabe von Zusatzstoff entlang oder lotrecht der Längserstreckung des Dichtabschnitts; unterschiedliche Zusatzstoff im Dichtabschnitt; Materialgradient im Dichtabschnitt hin zum Walkabschnitt und/oder hin zum Verspannabschnitt, insbesondere durch einen Temperaturunterschied und/oder durch eine unterschiedliche Bearbeitungsdauer im Herstellungsprozess des Dichtabschnitts; unterschiedliche Materialien im Dichtabschnitt, insbesondere entlang oder lotrecht zur Längserstreckung des Dichtstegs; Vorzugsrichtung des Materials im Herstellungsprozess, insbesondere durch Materialauftrag bei der Bearbeitung oder Ziehen als Nachbearbeitungsschritt.

Durch die Ausbildung einer unterschiedlichen Stauchgrenze und/oder eines unterschiedlichen Druckverformungsrests entlang und lotrecht zur Längserstreckung des Dichtabschnitts (anisotrop) kommt es zu einem besonders vorteilhaften Verhalten des Dichtabschnitts beim Zusammenwirken mit einem Ventilsitz eines Membranventils. Entlang des Dichtabschnitts wird so eine Verstärkung im dynamisch druckbelasteten Bereich erzielt. Lotrecht zur Längserstreckung des Dichtabschnitts kommt es zu einer geringen Materialverformung, sodass eine sichere Abdichtung am Dichtabschnitt erzielt wird. Gleichzeitig wird eine Elastizität entlang der Längserstreckung sichergestellt, sodass sich der Dichtabschnitt an den Ventilsitz anformen kann. Ferner kann so der Übergang zwischen dem kraftübertragenden Dichtabschnitt und dem walkenden Walkbereich optimal ausgebildet werden.

Ein vorteilhafter Aspekt der Erfindung sieht vor, dass ein Verhältnis zwischen der Stauchgrenze des Dichtabschnitts lotrecht zu seiner Längserstreckung und der Stauchgrenze des Dichtabschnitts entlang seiner Längserstreckung in einem Bereich zwischen 10:1 und 1,1:1, insbesondere zwischen 5:1 und 2:1, bevorzugt zwischen 4:1 und 3:1, liegt, und/oder wobei ein Verhältnis zwischen dem Druckverformungsrest des Dichtabschnitts lotrecht zu seiner Längserstreckung und dem Druckverformungsrest des Dichtabschnitts entlang seiner Längserstreckung in einem Bereich zwischen 10:1 und 1,1:1, insbesondere zwischen 5:1 und 2:1, bevorzugt zwischen 4:1 und 3:1, liegt. Folglich ist die Ventilmembran optimal auf die unterschiedlichen Bereiche und/oder Funktionen angepasst.

Die der Erfindung zugrundeliegende Aufgabe wird ebenfalls gelöst durch eine Ventilmembran mit den Merkmalen des Anspruchs 3. Die Erfindung ist gerichtet auf eine Ventilmembran für ein Membranventil, die Ventilmembran umfassend: einen einer gedachten Lotebene einer Stellachse folgenden Verspannabschnitt, und einen vom Verspannabschnitt umgebenen Funktionsabschnitt; wobei der Funktionsabschnitt umfasst: wenigstens zwei Walkabschnitte; und wenigstens einen stegförmigen, die wenigstens zwei Walkabschnitte voneinander trennenden Dichtabschnitt. Die zwei Walkabschnitte weisen einen größeren Druckverformungsrest und/oder eine kleinere Stauchgrenze auf als der Verspannabschnitt.

Ein vorteilhafter Aspekt der Erfindung sieht vor, dass ein Verhältnis zwischen dem Druckverformungsrest der Walkabschnitte und dem Druckverformungsrest des Verspannabschnitts in einem Bereich zwischen 10:1 und 1,1:1, insbesondere zwischen 5:1 und 2:1, bevorzugt zwischen 4:1 und 3:1, liegt. Ein weiterer vorteilhafter Aspekt der Erfindung sieht vor, dass ein Verhältnis zwischen der Stauchgrenze der Walkabschnitte und der Stauchgrenze des Verspannabschnitts in einem Bereich zwischen 1:10 und 1:1,1, insbesondere zwischen 1:5 und 1:2, bevorzugt zwischen 1:4 und 1:3, liegt.

Ein unterschiedlicher Druckverformungsrest und/oder eine unterschiedliche Stauchgrenze kann auch durch unterschiedliche Vernetzungscharakteristiken des verwendeten Elastomermaterials hervorgerufen werden. Vorzugsweise sind die unterschiedlichen Abschnitte aus einem, insbesondere demselben, Elastomer hergestellt.

Die der Erfindung zugrundeliegende Aufgabe wird ebenfalls gelöst durch eine Ventilmembran mit den Merkmalen des Anspruchs 5. Die Erfindung ist gerichtet auf eine Ventilmembran für ein Membranventil, die Ventilmembran umfassend: einen einer gedachten Lotebene einer Stellachse folgenden Verspannabschnitt, und einen vom Verspannabschnitt umgebenen Funktionsabschnitt; wobei der Funktionsabschnitt umfasst: wenigstens zwei Walkabschnitte; und wenigstens einen stegförmigen, die wenigstens zwei Walkabschnitte voneinander trennenden Dichtabschnitt, wobei der Dichtabschnitt eine größere Stauchgrenze und/oder einen kleineren Druckverformungsrest als die wenigstens zwei Walkabschnitte oder Verspannabschnitt aufweist. Alternativ oder zusätzlich weist der Dichtabschnitt vorzugsweise einen größeren Druckverformungsrest als der Verspannabschnitt auf.

Zur Ausbildung einer unterschiedlichen Stauchgrenze und/oder eines unterschiedlichen Druckverformungsrest in verschiedenen Bereichen der Ventilmembran können eine, mehrere oder alle der folgenden Merkmale vorgesehen sein: unterschiedliche Dicke am oder im Verspannabschnitt und/oder am oder im Funktionsabschnitt, insbesondere am oder im Dichtabschnitt und/oder am oder im Walkabschnitt; Einlage eines Versteifungselements im oder am Dichtabschnitt; Zusatzstoff entlang der Längserstreckung des Dichtabschnitts; unterschiedliche Zusatzstoff im Dichtabschnitt und/oder im Verspannabschnitt und/oder im Walkabschnitt; Materialgradient im Dichtabschnitt hin zum Walkabschnitt und/oder hin zum Verspannabschnitt, insbesondere durch einen Temperaturunterschied und/oder durch eine unterschiedliche Bearbeitungsdauer im Herstellungsprozess der Ventilmembran; unterschiedliche Materialien im Dichtabschnitt, insbesondere am Mittelsteg und/oder Außensteg, und/oder im Walkabschnitt und/oder im Verspannabschnitt; Vorzugsrichtung des Materials im Herstellungsprozess, insbesondere durch Materialauftrag bei der Bearbeitung, Ziehen als Nachbearbeitungsschritt.

Durch die Ausbildung einer unterschiedlichen Stauchgrenze und/oder eines unterschiedlichen Druckverformungsrests im Dichtabschnitt und in den Walkabschnitten kommt es zu einem besonders vorteilhaften Verhalten der Ventilmembran im Betrieb. Die einzelnen Bereiche sind entsprechend ihrer Anforderungen im Betrieb ausgebildet. Am Dichtabschnitt wird so eine Verstärkung erzielt, welche besonders vorteilhaft für die Anformung und Abdichtung am Ventilsitz ist. Ferner sind die Walkabschnitte durch eine hohe Flexibilität optimal für die Walkbewegung im Betrieb ausgebildet. Folglich ergibt sich eine zuverlässige und verschleißbeständige Ventilmembran.

Ein vorteilhafter Aspekt der Erfindung sieht vor, dass ein Verhältnis zwischen der Stauchgrenze des Dichtabschnitts und der Stauchgrenze der wenigstens zwei Walkabschnitte und/oder des Verspannabschnitts in einem Bereich zwischen 10:1 und 1,1:1, insbesondere zwischen 5:1 und 2:1, bevorzugt zwischen 4:1 und 3:1, liegt, und/oder wobei ein Verhältnis zwischen dem Druckverformungsrest des Dichtabschnitts und dem Druckverformungsrest der wenigstens zwei Walkabschnitte in einem Bereich zwischen 1:10 und 1:1,1, insbesondere zwischen 1:5 und 1:2, bevorzugt zwischen 1:4 und 1:3, liegt, und/oder wobei ein Verhältnis zwischen dem Druckverformungsrest des Dichtabschnitts und des Verspannabschnitts in einem Bereich zwischen 10:1 und 1,1: 1, insbesondere zwischen 5:1 und 2:1, bevorzugt zwischen 4:1 und 3:1, liegt. Folglich ist die Ventilmembran optimal auf die unterschiedlichen Bereiche und/oder Funktionen angepasst.

Ein vorteilhafter Aspekt der Erfindung sieht vor, dass die Stauchgrenze und/oder der Druckverformungsrest des Dichtabschnitts durch eine Messung parallel zur Stellachse messbar ist und/oder zu messen ist. Die Stauchgrenze und/oder der Druckverformungsrest des Dichtabschnitts ist vorzugsweise lotrecht zu seiner Längserstreckung durch eine Messung parallel zur Stellachse oder lotrecht zur Stellachse und lotrecht seiner Längserstreckung messbar und/oder zu messen. Die Stauchgrenze und/oder der Druckverformungsrest des Dichtabschnitts ist vorzugsweise entlang seiner Längserstreckung durch eine Messung parallel seiner Längserstreckung messbar und/oder zu messen. Die jeweilige Messung kann dabei entweder an der Ventilmembran als Ganzes oder an einem ausgeschnittenen Teil der Ventilmembran durchgeführt werden. Zur Messung der Stauchgrenze kann vorzugsweise ein bekannter Druckversuch zur Bestimmung von Fließkurven Verwendung finden, insbesondere für Kunststoffe die Norm DIN EN ISO 604, für Elastomere die Norm DIN ISO 7743 und für faserverstärkte Kunststoffe die Norm DIN EN 2850. Zur Messung des Druckverformungsrests kann vorzugsweise ein bekannter Druckversuch Verwendung finden, insbesondere die Norm DIN ISO 815.

Ein vorteilhafter Aspekt der Erfindung sieht vor, dass die Stauchgrenze des Dichtabschnitts, insbesondere lotrecht zu seiner Längserstreckung, größer als 0,1 N/mm2, insbesondere 0,2 N/mm2, bevorzugt 0,5 N/mm2, und/oder kleiner als 10 N/mm2, insbesondere 5 N/mm2, bevorzugt 2 N/mm2, ist, und/oder wobei der Druckverformungsrest des Dichtabschnitts, insbesondere lotrecht zu seiner Längserstreckung, größer als 2%, insbesondere 5%, bevorzugt 10%, und/oder kleiner als 40%, insbesondere 35%, bevorzugt 30%, ist.

Ein vorteilhafter Aspekt der Erfindung sieht vor, dass der Dichtabschnitt entlang seiner Längserstreckung eine veränderliche Stauchgrenze und/oder einen veränderlichen Druckverformungsrest aufweist. Demnach ist der Übergang zwischen dem Dichtabschnitt und dem Verspannabschnitt optimal einstellbar. Es ist denkbar, dass die Verstärkung in Richtung des Verspannabschnitts hin abnimmt. Zudem kann der Dichtabschnitt am Druckstück gezielt verstärkt werden.

Ein vorteilhafter Aspekt der Erfindung sieht vor, dass der Dichtabschnitt einen ersten Stegabschnitt und zwei dem Verspannabschnitt zugewandte zweite Stegabschnitte aufweist, wobei der erste Stegabschnitt zwischen den zweiten Stegabschnitten angeordnet ist, wobei der erste Stegabschnitt eine größere Stauchgrenze und/oder einen kleineren Druckverformungsrest aufweist als die zweiten Stegabschnitte.

Die der Erfindung zugrundeliegende Aufgabe wird ebenfalls gelöst durch eine Ventilmembran mit den Merkmalen des Anspruchs 11. Die Erfindung ist gerichtet auf eine Ventilmembran für ein Membranventil, die Ventilmembran umfassend: einen einer gedachten Lotebene einer Stellachse folgenden Verspannabschnitt, und einen vom Verspannabschnitt umgebenen Funktionsabschnitt; wobei wenigstens der Funktionsabschnitt eine Armierungsstruktur umfasst, dessen Stränge quer, insbesondere senkrecht, zur Längserstreckung eines Dichtabschnitts des Funktionsabschnitts verlaufen.

Demnach können die Bereiche der Ventilmembran, insbesondere des Dichtabschnitts, ebenfalls optimal auf die einzelnen Funktionen angepasst werden.

Ein vorteilhafter Aspekt der Erfindung sieht vor, dass die Armierungsstruktur als Armierungsgewebe ausgebildet ist und/oder die Stränge als Schussfäden ausgebildet sind. Aufgrund der gerichteten Anordnung der Schussfäden kann das Fließen des Dichtabschnitts signifikant reduziert werden, was einen positiven Einfluss auf Abdichtung hat. Die Schussfäden sind quer oder senkrecht zur Längserstreckung angeordnet, wenn insbesondere wenigstens 50%, vorzugsweise wenigstens 70% und bevorzugt wenigstens 90% der Schussfäden quer oder senkrecht zur Längserstreckung angeordnet sind.

Ein vorteilhafter Aspekt der Erfindung sieht vor, dass das Armierungsgewebe ferner quer, insbesondere senkrecht, zu den Schussfäden verlaufende Kettfäden umfasst. Es sind alternativ auch andere Webtechniken, wie z.B. Denim, und/oder andere Wirkstrukturen denkbar.

Ein vorteilhafter Aspekt der Erfindung sieht vor, dass ein Schussfadenabstand zwischen den Schussfäden kleiner als ein Kettfadenabstand der Kettfäden ist. Demnach kann weiter ein Fließen quer oder senkrecht zur Längserstreckung des Dichtabschnitts reduziert werden.

Ein vorteilhafter Aspekt der Erfindung sieht vor, dass ein Verhältnis zwischen dem Schussfadenabstand und dem Kettfadenabstand in einem Bereich zwischen 1:1,2 und 1:10, insbesondere 1:2 und 1:7, bevorzugt 1:3 und 1:5 liegt.

Ein vorteilhafter Aspekt der Erfindung sieht vor, dass die Armierungsstruktur in einem einer Nassseite der Ventilmembran zugewandten Bereich angeordnet ist, insbesondere in einer Höhe von 1/3 der Höhenerstreckung der Ventilmembran, vorzugsweise des Dichtabschnitts, angeordnet ist. Die Höhenerstreckung verläuft parallel zur Stellachse und erstreckt sich vorzugsweise von einer im Betrieb der Durchgangsleitung zugewandten ersten Seite und der ersten Seite abgewandten zweiten Seite.

Der Verspannabschnitt und/oder der Funktionsabschnitt und/oder die Walkabschnitte und/oder der Dichtabschnitt sind vorzugsweise vor oder nach Formgebung, insbesondere mittels Schweißen, Kleben und/oder direktem Einsticken, verbunden. Es ist denkbar, dass eine Trägerschicht vorgesehen, in welcher durch unterschiedliche Herstellungsverfahren die Bereiche erfindungsgemäß unterschiedlich ausgebildet sind.

Die der Erfindung zugrundeliegende Aufgabe wird ebenfalls gelöst durch ein Membranventil mit den Merkmalen des Anspruchs 17. Die Erfindung ist gerichtet auf ein Membranventil mit einer zuvor beschriebenen Ventilmembran, wobei der Dichtabschnitt der Ventilmembran mit einem Ventilsitz des Membranventils zum Schließen einer Durchgangsleitung des Membranventils zusammenwirkt.

Weitere Vorteile, Merkmale und Einzelheiten ergeben sich aus der nachfolgenden Erfindung, in der unter Bezugnahme auf die Zeichnung verschiedene Ausführungsbeispiele der Erfindung dargestellt sind. Dabei können die in den Ansprüchen und der Beschreibung genannten Merkmale jeweils einzeln für sich oder in beliebiger Kombination erfindungswesentlich sein.

Es zeigen:
- Fig. 1a-c: eine schematische Ansicht einer Ventilmembran;
- Fig. 2a-c: eine schematische Ansicht einer ersten Ausführungsform der Ventilmembran;
- Fig. 3: eine schematische Draufsicht einer zweiten Ausführungsform der Ventilmembran; und
- Fig. 4a-d: eine schematische Draufsicht weiterer Ausführungsformen der Ventilmembran.

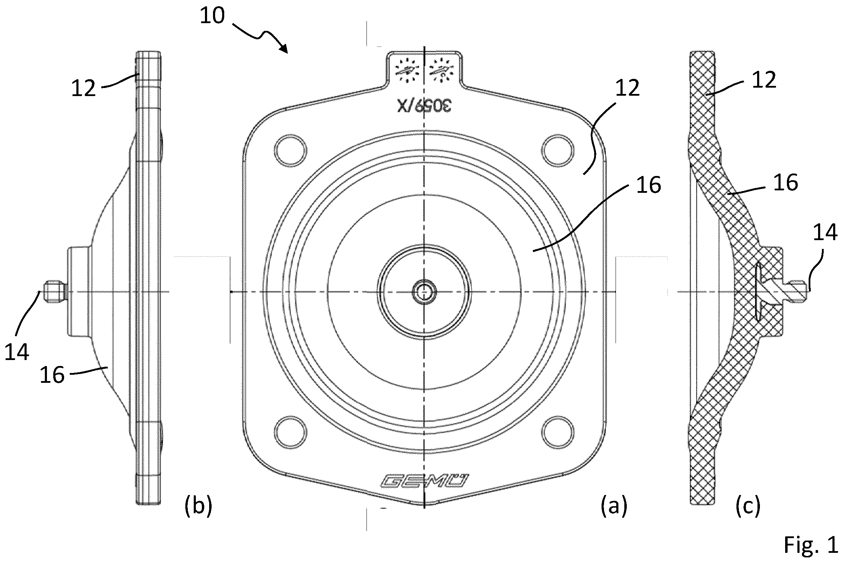

Die Ventilmembran 10 gemäß Fig. 1 ist zur Verwendung in einem nicht gezeigten Membranventil geeignet. Die Ventilmembran 10 weist mehrere funktionale Bereich auf.

Die Ventilmembran 10 weist einen Verspannabschnitt 12 auf, welcher einer gedachte Lotebene einer Stellachse 14 folgt. Der Verspannabschnitt 12 umgibt einen Funktionsabschnitt 16, welcher im Wesentlichen kreisförmig ausgebildet ist. Der Verspannabschnitt 12 dient zum Festsetzen der Ventilmembran 10 am Membranventil und wird insbesondere zwischen einem Gehäuseteil des Membranventils und einem Gehäuseteil des Antriebssystems verspannt. Demnach wird der Verspannabschnitt 12 im Betrieb des Membranventils statisch belastet.

Der Verspannabschnitt 12 muss sicher verspannt werden. Daher ist es in diesem Bereich von besonderer Bedeutung, dass der Verspannabschnitt 12 parallel zur Stellachse 14 eine gleichbleibende Höhe aufweist. So kann mit konstanten Verspannbedingungen die Ventilmembran 10 sicher festgesetzt werden. Jedoch kommt es beim Material mit der Belastungszeit zu einer Druckverformung, welche in dem Fall gering sein sollte.

Der Funktionsabschnitt 16 weist zwei Walkabschnitte 18, insbesondere einen ersten Walkabschnitt 18A und einen zweiten Walkabschnitt 18B, auf. Die Walkabschnitte 18 werden von einem stegförmigen Dichtabschnitt 20 voneinander getrennt. Die Ventilmembran 10 wird im Bereich des Funktionsabschnitts 16 entlang der Stellachse 14 zwischen einer Öffnungsstellung und einer Schließstellung verlagert. In der Schließstellung kommt der Dichtabschnitt 20 zur Anlage an einen Ventilsitz und dichtet eine Durchgangsleitung eines Membranventils ab. In der Öffnungsstellung wird die Durchgangsleitung freigegeben. In Fig. 1 ist die Ventilmembran 10 in der zur Öffnungsstellung korrespondierenden Einstellung dargestellt. Zur Verlagerung des Funktionsabschnitts 16 ist der Funktionsabschnitt 16 mit einer Antriebsstange und insbesondere einem Druckstück verbunden.

Bei der Bewegung der Ventilmembran 10 vollziehen die Walkabschnitte 18 eine Walkbewegung. Demnach ist der Funktionsabschnitt 16, insbesondere der Dichtabschnitt 20 und/oder die Walkabschnitte 18, einer dynamischen Belastung im Betrieb des Membranventils ausgesetzt. Zudem unterscheiden sich auch die dynamischen Belastungen zwischen dem Dichtabschnitt 20 und den Walkabschnitten 18.

Der Dichtabschnitt 20 wird wiederholt auf den Ventilsitz gepresst, sodass es zu einer Druckbeanspruchung am Dichtabschnitt 20 kommt. Der Dichtabschnitt 20 muss eine Elastizität ausweisen, sodass er über den gesamten Ventilsitz zur Anlage kommt und so eine sichere Abdichtung gewährleistet. Allerdings sollte die Elastizität auch derart eingestellt sein, dass der Dichtabschnitt 20 formstabil ist, sodass das Material nicht übermäßig lotrecht zu einer Längserstreckung 22 des Dichtabschnitts 20 verformt bzw. verdrängt wird.

Die Walkabschnitte 18 erfahren beim Walken gleichzeitig Druck- und Zugbeanspruchungen, sodass auch diese eine entsprechende Elastizität aufweisen müssen. Jedoch muss zudem sichergestellt sein, dass diese nicht brechen oder reißen.

Demnach weist die Ventilmembran 10 unterschiedliche Bereich auf, welche unterschiedlichen Belastungen ausgesetzt sind und daher diametrale Anforderungen an das Material stellen.

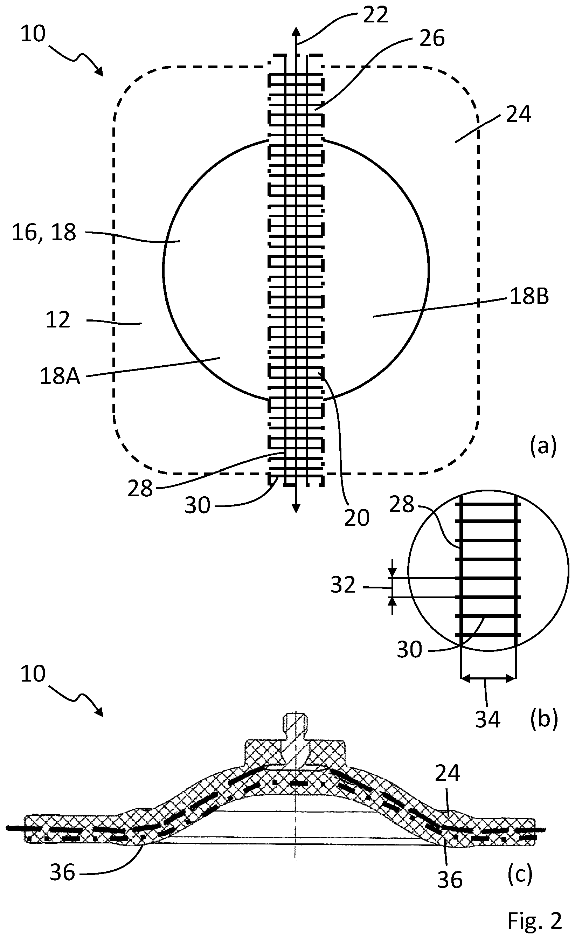

Gemäß Fig. 2a-b weist die Ventilmembran 10 ein durchgängiges Trägermaterial 24 (Strich-Linie) auf. Im Bereich des Dichtabschnitts 20 ist eine Armierungsstruktur 26 vorgesehen (Strich-Punkt-Linie). Die Armierungsstruktur 26 kann in Verlängerung der Längserstreckung 22 des Dichtabschnitts 20 sich zudem in den Verspannabschnitt 12 hineinziehen, sodass keine Sollbruchstelle zwischen dem dynamisch belasteten Funktionsabschnitt 16 und dem statisch belasteten Verspannabschnitt 12 entsteht. Die Armierungsstruktur 26 kann als Armierungsgewebe mit Kettfäden 28 und Schussfäden 30 ausgebildet sein. Die Armierungsstruktur 26 kann aus einem einlagigen oder mehrlagigen Armierungsgewebe gebildet sein.

Die Armierungsstruktur 26 ist dabei derart angeordnet, dass die Kettfäden 28 quer zur Längserstreckung 22 des Dichtabschnitts 20 angeordnet sind. Im Sinne der Erfindung ist unter quer zur Längserstreckung 22 "nicht parallel" zu verstehen. Demnach sind die Kettfäden 28 nicht parallel zur Längserstreckung 22 ausgebildet. Vorzugsweise sind die Kettfäden 28 zumindest im Wesentlichen senkrecht, insbesondere senkrecht, zur Längserstreckung 22 des Dichtabschnitts 20 angeordnet. Die Kettfäden 28 können mit der Längserstreckung 22 des Dichtabschnitts 20 einen Winkel im Bereich zwischen 60° und 120°, insbesondere 75° und 105°, vorzugsweise 85° und 95° einschließen. Die Schussfäden 30 sind quer zu den Kettfäden 28 angeordnet. Die Schussfäden 30 können zumindest im Wesentlichen senkrecht, insbesondere senkrecht, zu den Kettfäden 28 angeordnet sein. Die Schussfäden 30 können mit den Kettfäden 28 einen Winkel im Bereich zwischen 60° und 120°, insbesondere 75° und 105°, vorzugsweise 85° und 95° einschließen. In einer weiteren Ausführungsform sind die Schussfäden 30 und die Kettfäden 28 in der Anordnung zur Längserstreckung 22 des Dichtabschnitts 20 vertauscht. Die Winkelangaben gelten in dieser Ausführungsform ebenfalls, wobei dann die Kettfäden 28 und Schussfäden 30 zu tauschen sind.

Damit geht einher, dass der Dichtabschnitt 20 lotrecht zu seiner Längserstreckung 22 eine größere Stauchgrenze als parallel zur bzw. entlang der Längserstreckung 22 aufweist. Zudem geht damit einher, dass der Dichtabschnitt 20 lotrecht zu seiner Längserstreckung 22 einen kleineren Druckverformungsrest als parallel zur bzw. entlang der Längserstreckung 22 aufweist.

Fig. 2b zeigt eine Detailansicht des Dichtabschnitts 20 und der darin vorgesehenen Fäden. Zur Verringerung des Fließens des Dichtabschnitts 20 senkrecht zur Längserstreckung 22 des Dichtabschnitts 20 weisen die primären Fäden, welche quer, insbesondere senkrecht, zur Längserstreckung 22 des Dichtabschnitts 20 angeordnet sind, eine höhere Fadendichte als die sekundären Fäden auf, welche quer zu den primären Fäden angeordnet sind. Wenn die Schussfäden 30 senkrecht und die Kettfäden 28 parallel zu Längserstreckung 22 des Dichtabschnitts 20 angeordnet sind, weisen die Schussfäden 30 einen Schussfadenabstand 32 zwischen zwei benachbarten Schussfäden 30 und die Kettfäden 28 einen Kettfadenabstand 34 zwischen zwei benachbarten Kettfäden 28 auf, wobei der Schussfadenabstand 32 geringer als der Kettfadenabstand 34 ausgebildet ist. Vorzugsweise liegt ein Verhältnis zwischen dem Schussfadenabstand 32 und dem Kettfadenabstand 34 in einem Bereich zwischen 1:1,2 und 1:10, insbesondere 1:2 und 1:7, bevorzugt 1:3 und 1:5. Der Kettfadenabstand 34 und/oder der Schussfadenabstand 32 kann entlang der Längserstreckung 22 und/oder lotrecht zur Längserstreckung 22 gleichmäßig oder veränderlich sein, insbesondere zu den Rändern abnehmen oder zu den Rändern zunehmen.

Zur weiteren Verbesserung des Dichtabschnitts 20 ist die Armierungsstruktur 26 gemäß Fig. 2c in einem einer Nassseite 36 der Ventilmembran 10 zugewandten Bereich angeordnet. Die Armierungsstruktur 26 ist vorzugsweise in einer Höhe von 1/3 der parallel zur Stellachse 14 verlaufenden Höhenerstreckung der Ventilmembran 10 angeordnet. Demnach ist die Armierungsstruktur 26 gezielt im Bereich der Belastung durch die Abdichtung angeordnet.

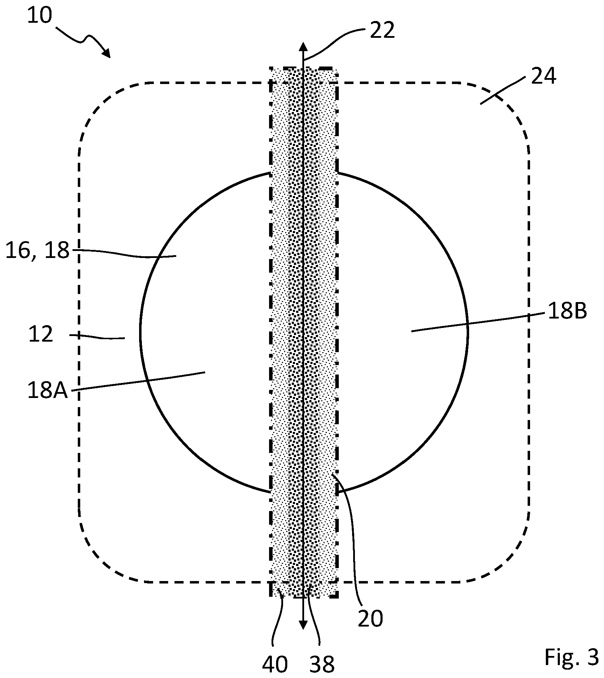

Alternativ kann eine Anisotropie des Dichtabschnitts 20 durch einen Materialgradienten realisiert werden. In Fig. 3 ist gezeigt, dass das Material im Dichtabschnitt 20 bandförmig ausgebildet ist. Demnach weist der Dichtabschnitt 20 ein Innenband 38 und zwei Außenbänder 40, wobei das Innenband 38 lotrecht zur Längserstreckung 22 zwischen den Außenbändern 40 angeordnet ist. Das Innenband 38 und die Außenbänder 40 können sich dahingehend unterscheiden, dass ein unterschiedliches Material Verwendung findet oder dass das Material im jeweiligen Band im Herstellungsprozess unterschiedlich behandelt wurde, insbesondere mit unterschiedlichen Temperatur und/oder Herstellungszeiten hergestellt wurde. Der Dichtabschnitt 20 kann alternativ auch so ausgebildet sein, dass die Eigenschaften lotrecht zur Längserstreckung 22 sich von einer Mittelachse zum Rand hin sprunghaft oder fließend ändern. Demnach weist der Dichtabschnitt 20 unterschiedliche Eigenschaften entlang der Längserstreckung 22 als quer zur Längserstreckung 22 auf. Es ist z.B. denkbar, dass das Innenband 38 mit einer höheren Temperatur oder einer längeren Herstellungsdauer als die Außenbänder 40 behandelt wurde.

Damit geht auch einher, dass der Dichtabschnitt 20 lotrecht zu seiner Längserstreckung 22 eine größere Stauchgrenze als parallel zur bzw. entlang der Längserstreckung 22 aufweist. Zudem geht damit einher, dass der Dichtabschnitt 20 lotrecht zu seiner Längserstreckung 22 einen kleineren Druckverformungsrest als parallel zur bzw. entlang der Längserstreckung 22 aufweist.

Die unterschiedliche Behandlung kann sich ferner in Verlängerung der Längserstreckung 22 des Dichtabschnitts 20 auch in den Verspannabschnitt 12 hineinerstrecken, um eine Sollbruchstelle am Übergang zu vermeiden.

Vorzugsweise ist die Stauchgrenze des Dichtabschnitts 20, insbesondere lotrecht zu seiner Längserstreckung 22, größer als 0,1 N/mm², insbesondere 0,2 N/mm², bevorzugt 0,5 N/mm², und/oder kleiner als 10 N/mm², insbesondere 5 N/mm², bevorzugt 2 N/mm². Vorzugsweise ist der Druckverformungsrest des Dichtabschnitts 20, insbesondere lotrecht zu seiner Längserstreckung 22, größer als 2%, insbesondere 5%, bevorzugt 10%, und/oder kleiner als 40%, insbesondere 35%, bevorzugt 30%.

Es ist alternativ oder zusätzlich denkbar, dass der Dichtabschnitt 20 entlang dessen Längserstreckung 22 ebenfalls mit Bändern oder veränderlichen Materialeigenschaften ausgebildet sein kann. Der Übergang kann dabei ebenfalls sprunghaft oder fließend sein. Diese sind z.B. durch einen veränderten Kettfadenabstand 34 oder Schussfadenabstand 32 entlang der Längserstreckung 22 oder durch unterschiedliche Herstellungstemperaturen oder -dauern einstellbar.

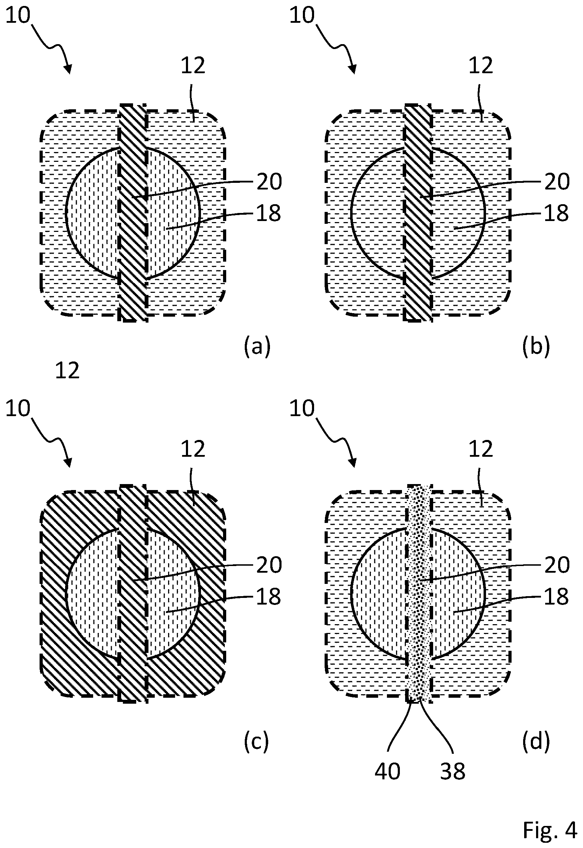

Gemäß Fig. 4a-d können auch der Dichtabschnitt 20, der Verspannabschnitt 12 und der Walkabschnitt 18 jeweils unterschiedliche Bauteil- und/oder Materialeigenschaften aufweisen.

In Fig. 4a weist der Verspannabschnitt 12 erste Bauteil- und/oder Materialeigenschaften, die Walkabschnitte 18 zweite Bauteil- und/oder Materialeigenschaften und der Dichtabschnitt 20 dritte Bauteil- und/oder Materialeigenschaften auf, wobei sich diese hinsichtlich der Stauchgrenze und/oder dem Druckverformungsrest unterscheiden. Die Ventilmembran 10 ist vorzugsweise so ausgebildet, dass der Dichtabschnitt 20 einen kleineren Druckverformungsrest und/oder eine größere Stauchgrenze als die zwei Walkabschnitte 18 aufweist. Die Ventilmembran 10 ist vorzugsweise so ausgebildet, dass der Dichtabschnitt 20 einen größeren Druckverformungsrest und/oder eine kleinere Stauchgrenze als der Verspannabschnitt 12 aufweist. Die Ventilmembran 10 ist vorzugsweise so ausgebildet, dass die zwei Walkabschnitte 18 einen größeren Druckverformungsrest und/oder eine kleinere Stauchgrenze als der Verspanabschnitt 12 aufweist. Demnach ist die Ventilmembran 10 gezielt auf die funktionalen Bereiche und deren Anforderungen angepasst.

In Fig. 4b weisen der Verspannabschnitt 12 und die Walkabschnitte 18 dieselben Bauteil- und/oder Materialeigenschaften auf, wobei sich diese von den Bauteil- und/oder Materialeigenschaften des Dichtabschnitts 20 unterscheiden.

In Fig. 4c weisen der Verspannabschnitt 12 und der Dichtabschnitt 20 dieselben Bauteil- und/oder Materialeigenschaften auf, wobei sich diese von den Bauteil- und/oder Materialeigenschaften der Walkabschnitte 18 unterscheiden.

Die Ausführungsform gemäß Fig. 4d entspricht der von Fig. 4a, wobei der Dichtabschnitt 20 zusätzlich gemäß Fig. 2 mit anisotropen Bauteil- und/oder Materialeigenschaften oder gemäß Fig. 3 mit graduellen Bauteil- und/oder Materialeigenschaften entlang und/oder lotrecht zur Längserstreckung 22 des Dichtabschnitts 20 ausgebildet ist.

Vorzugsweise liegt ein Verhältnis zwischen der Stauchgrenze des Dichtabschnitts 20 und der Stauchgrenze der wenigstens zwei Walkabschnitte 18 und/oder des Verspannabschnitts 12 in einem Bereich zwischen 10:1 und 1,1: 1, insbesondere zwischen 5:1 und 2:1, bevorzugt zwischen 4:1 und 3:1. Vorzugsweise liegt ein Verhältnis zwischen dem Druckverformungsrest des Dichtabschnitts 20 und dem Druckverformungsrest der wenigstens zwei Walkabschnitte 18 in einem Bereich zwischen 1:10 und 1:1,1, insbesondere zwischen 1:5 und 1:2, bevorzugt zwischen 1:4 und 1:3. Vorzugsweise liegt ein Verhältnis zwischen dem Druckverformungsrest des Dichtabschnitts 20 und dem Druckverformungsrest des Verspannabschnitts 12 in einem Bereich zwischen 10:1 und 1,1:1, insbesondere zwischen 5:1 und 2:1, bevorzugt zwischen 4:1 und 3:1.

Vorzugsweise ist der Druckverformungsrest im Verspannabschnitt 12 kleiner als 20%, insbesondere 15%, bevorzugt 10%.

### Bezugszeichenliste

- 10: Ventilmembran
- 12: Verspannabschnitt
- 14: Stellachse
- 16: Funktionsabschnitt
- 18: Walkabschnitte
- 18A: ersten Walkabschnitt
- 18B: zweiten Walkabschnitt
- 20: Dichtabschnitt
- 22: Längserstreckung des Dichtabschnitts
- 24: Trägermaterial
- 26: Armierungsstruktur
- 28: Kettfäden
- 30: Schussfäden
- 32: Schussfadenabstand
- 34: Kettfadenabstand
- 36: Nassseite der Ventilmembran
- 38: Innenband des Dichtabschnitts
- 40: Außenbänder des Dichtabschnitts

## Patentansprüche

1. Ventilmembran (10) für ein Membranventil, die Ventilmembran (10) umfassend:
- einen einer gedachten Lotebene einer Stellachse (14) folgenden Verspannabschnitt (12), und
- einen vom Verspannabschnitt (12) umgebenen Funktionsabschnitt (16);
wobei der Funktionsabschnitt (16) umfasst:
- wenigstens zwei Walkabschnitte (18); und
- wenigstens einen stegförmig verlaufenden, die wenigstens zwei Walkabschnitte (18) voneinander trennenden und zwei Unterabschnitte des Verspannabschnitts (12) verbindenden Dichtabschnitt (20),
wobei der Dichtabschnitt (20) zumindest abschnittsweise, insbesondere entlang seiner gesamten Längserstreckung, lotrecht zu seiner Längserstreckung (22) eine größere Stauchgrenze und/oder einen kleineren Druckverformungsrest als entlang seiner Längserstreckung (22) aufweist.

2. Ventilmembran (10) nach Anspruch 1, wobei ein Verhältnis zwischen der Stauchgrenze des Dichtabschnitts (20) lotrecht zu seiner Längserstreckung (22) und der Stauchgrenze des Dichtabschnitts (20) entlang seiner Längserstreckung (22) in einem Bereich zwischen 10:1 und 1,1:1, insbesondere zwischen 5:1 und 2:1, bevorzugt zwischen 4:1 und 3:1, liegt, und/oder
wobei ein Verhältnis zwischen dem Druckverformungsrest des Dichtabschnitts (20) lotrecht zu seiner Längserstreckung (22) und dem Druckverformungsrest des Dichtabschnitts (20) entlang seiner Längserstreckung (22) in einem Bereich zwischen 10:1 und 1,1:1, insbesondere zwischen 5:1 und 2:1, bevorzugt zwischen 4:1 und 3:1, liegt.

3. Ventilmembran (10) für ein Membranventil, die Ventilmembran (10) umfassend:
- einen einer gedachten Lotebene einer Stellachse (14) folgenden Verspannabschnitt (12), und
- einen vom Verspannabschnitt (12) umgebenen Funktionsabschnitt (16);
wobei der Funktionsabschnitt (16) umfasst:
- wenigstens zwei Walkabschnitte (18); und
- wenigstens einen stegförmigen, die wenigstens zwei Walkabschnitte (18) voneinander trennenden Dichtabschnitt (20),
wobei die zwei Walkabschnitte (18) einen größeren Druckverformungsrest und/oder eine kleinere Stauchgrenze aufweisen als der Verspannabschnitt (12).

4. Ventilmembran (10) nach Anspruch 3, wobei ein Verhältnis zwischen dem Druckverformungsrest der Walkabschnitte (18) und dem Druckverformungsrest des Verspannabschnitts (12) in einem Bereich zwischen 10:1 und 1,1:1, insbesondere zwischen 5:1 und 2:1, bevorzugt zwischen 4:1 und 3:1, liegt, und/oder wobei ein Verhältnis zwischen der Stauchgrenze der Walkabschnitte (18) und der Stauchgrenze des Verspannabschnitts (12) in einem Bereich zwischen 1:10 und 1:1,1, insbesondere zwischen 1:5 und 1:2, bevorzugt zwischen 1:4 und 1:3, liegt.

5. Ventilmembran (10) für ein Membranventil, die Ventilmembran (10) umfassend:
- einen einer gedachten Lotebene einer Stellachse (14) folgenden Verspannabschnitt (12), und
- einen vom Verspannabschnitt (12) umgebenen Funktionsabschnitt (16);
wobei der Funktionsabschnitt (16) umfasst:
- wenigstens zwei Walkabschnitte (18); und
- wenigstens einen stegförmig verlaufendenen, die wenigstens zwei Walkabschnitte (18) voneinander trennenden Dichtabschnitt (20),
wobei der Dichtabschnitt (20) eine größere Stauchgrenze und/oder einen kleineren Druckverformungsrest als die wenigstens zwei Walkabschnitte (18) und/oder einen größeren Druckverformungsrest als der Verspannabschnitt (12) aufweist.

6. Ventilmembran (10) nach Anspruch 5, wobei ein Verhältnis zwischen der Stauchgrenze des Dichtabschnitts (20) und der Stauchgrenze der wenigstens zwei Walkabschnitte (18) und/oder des Verspannabschnitts (12) in einem Bereich zwischen 10:1 und 1,1:1, insbesondere zwischen 5:1 und 2:1, bevorzugt zwischen 4:1 und 3:1, liegt, und/oder wobei ein Verhältnis zwischen dem Druckverformungsrest des Dichtabschnitts (20) und dem Druckverformungsrest der wenigstens zwei Walkabschnitte (18) in einem Bereich zwischen 1:10 und 1:1,1, insbesondere zwischen 1:5 und 1:2, bevorzugt zwischen 1:4 und 1:3, liegt, und/oder
wobei ein Verhältnis zwischen dem Druckverformungsrest des Dichtabschnitts (20) und dem Druckverformungsrest des Verspannabschnitts (12) in einem Bereich zwischen 10:1 und 1,1:1, insbesondere zwischen 5:1 und 2:1, bevorzugt zwischen 4:1 und 3:1, liegt.

7. Ventilmembran (10) nach einem der vorherigen Ansprüche,
wobei die Stauchgrenze und/oder der Druckverformungsrest des Dichtabschnitts (20) durch eine Messung parallel zur Stellachse (14) messbar ist und/oder zu messen ist, und/oder
wobei die Stauchgrenze und/oder der Druckverformungsrest des Dichtabschnitts (20) lotrecht zu seiner Längserstreckung (22) durch eine Messung parallel zur Stellachse (14) oder lotrecht zur Stellachse (14) und lotrecht seiner Längserstreckung (22) messbar ist und/oder zu messen ist, und/oder
wobei die Stauchgrenze und/oder der Druckverformungsrest des Dichtabschnitts (20) entlang seiner Längserstreckung (22) durch eine Messung parallel seiner Längserstreckung (22) messbar ist und/oder zu messen ist.

8. Ventilmembran (10) nach einem der vorherigen Ansprüche,
wobei die Stauchgrenze des Dichtabschnitts (20), insbesondere lotrecht zu seiner Längserstreckung (22), größer als 0,1 N/mm2, insbesondere 0,2 N/mm2, bevorzugt 0,5 N/mm2, und/oder kleiner als 10 N/mm2, insbesondere 5 N/mm2, bevorzugt 2 N/mm2, ist, und/oder
wobei der Druckverformungsrest des Dichtabschnitts (20), insbesondere lotrecht zu seiner Längserstreckung (22), größer als 2%, insbesondere 5%, bevorzugt 10%, und/oder kleiner als 40%, insbesondere 35%, bevorzugt 30%, ist.

9. Ventilmembran (10) nach einem der vorherigen Ansprüche, wobei der Dichtabschnitt (20) entlang seiner Längserstreckung (22) eine veränderliche Stauchgrenze und/oder einen veränderlichen Druckverformungsrest aufweist.

10. Ventilmembran (10) nach einem der vorherigen Ansprüche, wobei der Dichtabschnitt (20) einen ersten Stegabschnitt (18A) und zwei dem Verspannabschnitt (12) zugewandte zweite Stegabschnitte aufweist, wobei der erste Stegabschnitt zwischen den zweiten Stegabschnitten angeordnet ist, wobei der erste Stegabschnitt eine größere Stauchgrenze und/oder einen kleineren Druckverformungsrest aufweist als die zweiten Stegabschnitte.

11. Ventilmembran (10) für ein Membranventil, die Ventilmembran (10) umfassend:
- einen einer gedachten Lotebene einer Stellachse (14) folgenden Verspannabschnitt (12), und
- einen vom Verspannabschnitt (12) umgebenen Funktionsabschnitt (16);
wobei wenigstens der Funktionsabschnitt (16) ein Armierungsgewebe (26) umfasst, dessen Schussfäden (30) senkrecht zur Längserstreckung (22) eines Dichtabschnitts (20) des Funktionsabschnitts (16) verlaufen.

12. Ventilmembran (10) nach dem vorherigen Anspruch, wobei das Armierungsgewebe ferner quer, insbesondere senkrecht, zu den Schussfäden (30) verlaufende Kettfäden (28) umfasst.

13. Ventilmembran (10) nach dem vorherigen Anspruch, wobei ein Schussfadenabstand (32) zwischen den Schussfäden (30) kleiner als ein Kettfadenabstand (34) der Kettfäden (28) ist.

14. Ventilmembran (10) nach dem vorherigen Anspruch, wobei ein Verhältnis zwischen dem Schussfadenabstand (32) und dem Kettfadenabstand (34) in einem Bereich zwischen 1:1,2 und 1:10, insbesondere 1:2 und 1:7, bevorzugt 1:3 und 1:5 liegt.

15. Ventilmembran (10) nach einem der Ansprüche 11 bis 14, wobei das Armierungsgewebe (26) in einem einer Nassseite (36) der Ventilmembran (10) zugewandten Bereich angeordnet ist, insbesondere in einer Höhe von 1/3 der Höhenerstreckung der Ventilmembran (10), vorzugsweise des Dichtabschnitts (20), angeordnet ist.

16. Membranventil mit der Ventilmembran (10) nach einem der vorherigen Ansprüche, wobei der Dichtabschnitt (20) der Ventilmembran (10) mit einem Ventilsitz des Membranventils zum Schließen einer Durchgangsleitung des Membranventils zusammenwirkt.
